# DEMANDE DE BREVET EUROPEEN

(11) **EP 0 524 057 A1**
(43) Date de publication de la demande: **20.01.1993**
(21) Numéro de dépôt: 92401961.5
(22) Date de dépôt: 08.07.1992
(51) Int. Cl.: B60C 23/00

(54) **Dispositif pour la commande de l'échappement d'une enceinte pneumatique sous pression, en particulier pour le dégonflage rapide et contrôlé d'un pneu**

(30) Priorité: 17.07.1991 FR 9109042
(71) Demandeur: HUTCHINSON, F-75008 Paris (FR)
(72) Inventeur: Riquier, Didier, F-95340 Persan (FR); Lelièvre, Alain, F-60121 Le Mesnil-en-Thelle (FR)
(74) Mandataire: Ores, Irène

(57) **Abrégé**

Dispositif pour la commande de l'échappement d'une enceinte pneumatique sous pression, comprenant un poussoir d'actionnement (26) d'un percuteur (30) propre à coopérer avec la tige (T) de dégonflage de la valve monté à coulissement dans un carter (10) qui ménage une chambre (16) coaxiale au percuteur (30) de la tige de dégonflage (T) et qui est percée d'au moins un trou évent d'échappement du fluide gazeux contenu dans l'enceinte à dégonfler, qui se caractérise en ce que le percuteur (30) est monté à coulissement dans une rondelle-piston (35) logée dans ladite chambre (16) et qui est propre à coopérer avec le percuteur (30) à arc-boutement pour maintenir celui-ci dans une position autorisant l'échappement du fluide gazeux contenu dans l'enceinte.

## Description

L'invention a pour objet un dispositif pour la commande de l'échappement d'une enceinte sous pression et vise en particulier, mais sans que cette indication ait quelque caractère limitatif que ce soit, un dispositif propre à être rapporté sur la valve d'une roue de pneumatique pour provoquer d'une façon automatique le dégonflement de ce dernier jusqu'à une valeur de pression prédéterminée.

On sait que les conditions d'adhérence et de mobilité de véhicules, aussi bien civils que militaires, dépendent de la pression de gonflage de leurs pneumatiques et que celle-ci peut avoir à être réduite par rapport à la pression de roulage normale lorsque, par exemple, le véhicule est amené à franchir des terrains sableux, boueux ou analogues. La baisse de pression de gonflage des pneumatiques doit généralement être effectuée rapidement, d'une part, et jusqu'à une valeur bien déterminée, d'autre part. Aussi a-t-on déjà proposé, pour ce faire, soit des systèmes de réglage de la pression des pneus commandés à partir de l'habitacle du véhicule, mais qui sont cependant extrêmement onéreux et, de ce fait, d'application limitée, soit des dispositifs manoeuvrables à la main comme décrit, par exemple, dans FR-2 655 703 au nom de la Demanderesse. Le dispositif selon ce document comprend un poussoir d'actionnement d'un doigt propre à coopérer avec la tige de dégonflage de la valve, ledit poussoir étant monté dans un manchon dont il peut être rendu solidaire par l'intermédiaire d'un accouplement à billes escamotables, le manchon étant lui-même monté à coulissement dans un carter qui ménage une chambre coaxiale au doigt d'actionnement de la tige de dégonflage et qui est percé dans sa paroi latérale de trous évents d'échappement du fluide gazeux contenu dans l'enceinte à dégonfler. Si un tel dispositif est satisfaisant dans son fonctionnement, il est cependant d'un coût encore trop élevé pour une exploitation économique intéressante, en particulier si l'on considère que les véhicules civils ou militaires que doit équiper le dispositif comprennent généralement un nombre relativement important de roues.

Pour pallier cet inconvénient de coût, la Demanderesse s'est alors interrogée sur la possibilité de fournir un dispositif encore plus simple que le dispositif qu'elle avait déjà proposé et qui, comme ce dernier, est manoeuvrable à la main, bien adapté à la commande d'un dégonflage rapide, sûr et dans des conditions quantitativement reproductibles de pneumatiques de véhicules.

Le problème posé a été résolu, dans un dispositif permettant de commander l'échappement d'une enceinte pneumatique sous pression, notamment propre à commander le dégonflage d'un pneumatique rapidement et jusqu'à une valeur de pression prédéterminée après avoir été rapporté sur une valve équipant l'enceinte et qui comprend un poussoir d'actionnement d'un percuteur propre à coopérer avec la tige de dégonflage de la valve monté à coulissement dans un carter qui ménage une chambre coaxiale au percuteur percée d'au moins un trou évent d'échappement du fluide gazeux contenu dans l'enceinte à dégonfler par le fait que le percuteur est monté à coulissement dans une rondelle-piston logée dans ladite chambre et qui est propre à coopérer avec le percuteur à arc-boutement pour maintenir celui-ci dans une position autorisant l'échappement du fluide gazeux contenu dans l'enceinte à dégonfler jusqu'à ce que soit atteinte la valeur de pression prédéterminée.

De façon en soi connue, un ressort taré est disposé dans la chambre coaxiale au percuteur, entre la rondelle-piston et le fond de la chambre opposé à ladite rondelle pour le tarage de ladite valeur de pression prédéterminée.

Dans une forme de réalisation préférée, l'arc-boutement de la rondelle-piston sur le percuteur de la tige de dégonflage résulte de la mise en biais de la rondelle dans ladite chambre sous l'effet d'une butée de blocage en saillie dans ladite chambre coaxiale au percuteur.

Dans une réalisation préférée, la chambre coaxiale au percuteur est constituée par une cuvette à paroi latérale en partie filetée avec laquelle est propre à coopérer un bouchon taraudé permettant le réglage de la tare du ressort.

Dans une réalisation particulièrement avantageuse, le fond du bouchon est percé d'orifices qui débouchent dans la chambre coaxiale au percuteur et par lesquels peut également s'échapper le fluide gazeux contenu dans l'enceinte à dégonfler lorsque le dispositif est rendu opératoire.

Etant donné qu'un dispositif selon l'invention peut être placé à demeure sur le chapeau d'une valve de pneumatique, -et ainsi être soumis aux projections de boue, sable, etc...-, on prévoit, complémentairement, de protéger la chambre coaxiale au percuteur par un filtre-tamis placé au droit des orifices du bouchon et qui est interposé entre ce dernier et la cuvette limitant la chambre.

L'invention sera bien comprise par la description qui suit, faite à titre d'exemple et en référence au dessin annexé dans lequel :
- la figure 1 est une vue en coupe longitudinale d'un dispositif selon l'invention pour une première condition de repos ;
- la figure 2 est une vue analogue, mais à 90° de la précédente et pour la condition de fonctionnement.

L'invention est illustrée dans ce qui suit comme appliquée à un dispositif réalisé en tant que dispositif de dégonflage rapide d'un pneumatique de véhicule automobile. Pour une telle application, le dispositif comprend un corps ou carter 10, de forme générale cylindrique, d'axe 11, avec une première partie quelque peu en forme de cuvette 12 et un bouchon 13 fermant la cuvette 10. Celle-ci est percée d'un alésage taraudé 14 pour son montage, par vissage, sur le chapeau C d'une valve (non représentée) et dont la tige de dégonflage est montrée schématiquement en T. L'alésage 14 se poursuit, à l'opposé de la face antérieure a de la première partie 12, par un lamage 15, (d'abord cylindrique puis tronconique) et qui débouche dans une chambre 16 d'axe 11. La paroi latérale 17 de la chambre 16 est filetée à son extrémité opposée au fond, comme montré en f, tandis que ledit fond est percé d'un trou évent 18 dont le calibrage est choisi pour introduire une perte de charge de valeur prédéterminée lorsque la chambre 16, -ainsi qu'il sera explicité ci-après-, est en communication avec l'enceinte dont on cherche à commander l'échappement, et qui est montrée très schématiquement en E.

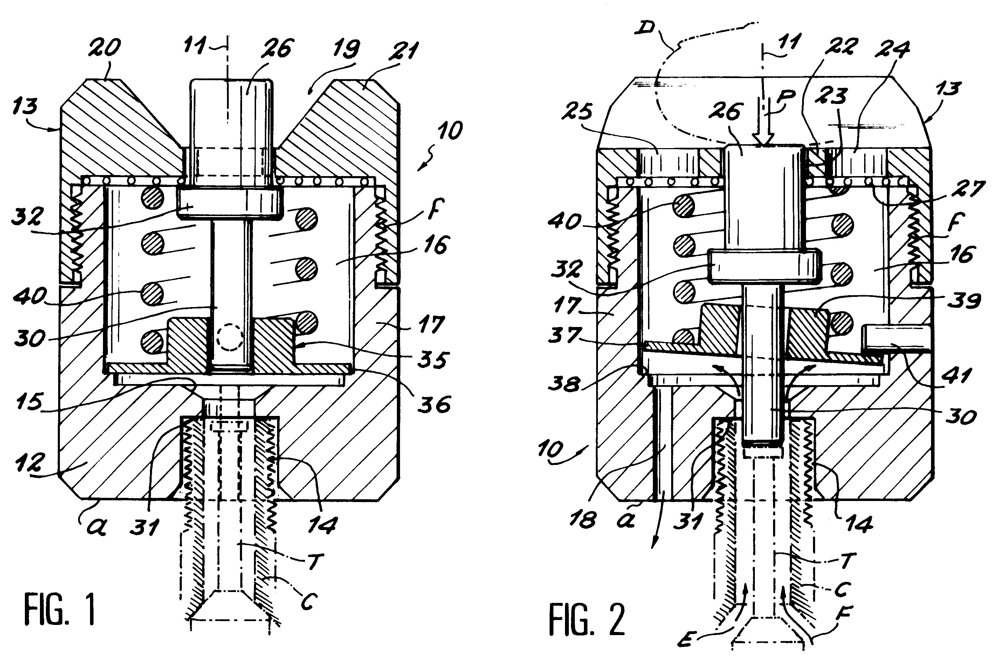

Avec le filetage f de la première partie 12 est propre à coopérer le taraudage du bouchon 13 conformé pour ménager une creusure 19 bordée par des nervures 20 et 21 de section droite quelque peu trapézoïdale. Comme bien visible sur la figure 2, le fond 22 du bouchon 13 est percé d'un trou 23 de passage à coulissement à d'un poussoir 26 qui présente une partie frontale 32 de plus grand diamètre que le reste de son corps et de deux orifices 24 et 25 de mise en communication de la chambre 16 avec l'atmosphère, un filtre-tamis 27, mis en place lors du vissage du bouchon 13 sur la partie 12, étant destiné à empêcher l'introduction dans la chambre 16, par les orifices 24 et 25, de corps étrangers comme des particules de boue, de sable, etc...

Dans la chambre 16 est également logé un percuteur 30, dont la longueur est telle qu'il ne fait pas saillie par rapport à la face frontale antérieure 31 de l'alésage taraudé 14 dans la condition non opératoire du dispositif qui est celle montrée sur la figure 1, et qui est propre à coopérer avec la tige de dégonflage T de la valve C lorsqu'il est déplacé d'une longueur suffisante à partir de sa condition de repos jusqu'à sa condition opératoire, montrée sur la figure 2. Le percuteur 30 est monté à coulissement dans une rondelle-piston 35 dont la rondelle proprement dite, 36, de diamètre correspondant à celui de la chambre 16 se poursuit en direction du bouchon 13 par un canon cylindrique 39. Dans l'espace ménagé entre la rondelle 36, -qui dans la condition de repos du dispositif repose par sa marge 37 sur un épaulement 38 de la chambre 16-, et la face antérieure du bouchon 13 est logé un ressort hélicoïdal taré, 40, qui entoure le poussoir 26 et le percuteur 30, tandis que dans la paroi cylindrique 17 de la partie 12 est logé un pion 41 qui fait saillie radialement dans la chambre 16 au-dessus de la rondelle 36.

Le fonctionnement du dispositif est le suivant:
Dans la condition initiale, montrée sur la figure 1, le dispositif est inopératoire. Le percuteur 30 est à distance de la tige de dégonflage T de la valve de l'enceinte sur laquelle le dispositif a été rapporté et le ressort 51 est non comprimé.

Pour provoquer l'échappement, par exemple le dégonflage du pneu sur la valve duquel le dispositif a été rapporté, l'utilisateur provoque l'enfoncement du poussoir 26 à l'intérieur de la chambre 16, par poussée dans le sens de la flèche P et, le plus simplement, par appui de son doigt montré schématiquement en D sur l'extrémité du poussoir. Cette poussée, transmise au percuteur 30, provoque le déplacement de ce dernier dans la direction de la flèche P et, lorsque le percuteur 30 vient au contact de la tige de dégonflage 31 de la valve, il repousse cette dernière qui entraîne l'obus de valve pour livrer passage au fluide contenu dans l'enceinte, comme montré par les flèches F. La pression exercée par le fluide sur la rondelle 36 provoque le déplacement de celle-ci à l'éloignement de l'épaulement 38, jusqu'à butée contre le pion 41 qui provoque une mise en biais de la rondelle-piston laquelle, prenant la position montrée sur la figure 2, bloque par arc-boutement le poussoir 30 ainsi maintenu dans la position montrée sur la figure 2 qui est la condition opératoire ; l'échappement du fluide contenu dans l'enceinte E qui se produit par le trou évent 18, ainsi que par les orifices 24 et 25 en raison du jeu existant entre la rondelle-piston 35 et la paroi de la chambre 16, fait décroître progressivement la pression dans la chambre 16 et, lorsque cette pression atteint celle correspondant à la valeur de tare du ressort 40, celui-ci repousse la rondelle 36 pour la ramener dans la position montrée sur la figure 1, ce qui libère le percuteur 30 et la tige T de la soupape, interrompant le dégonflage de l'enceinte.

Le fonctionnement du dispositif selon l'invention est ainsi rapide et sûr, d'une part, et fournit des résultats quantitativement reproductibles, d'autre part.

## Revendications

1. Dispositif pour la commande de l'échappement d'une enceinte pneumatique sous pression, notamment pour la commande du dégonflage d'un pneumatique rapidement et jusqu'à une valeur de pression prédéterminée après qu'il ait été rapporté sur une valve équipant l'enceinte, le dispositif comprenant un poussoir d'actionnement (26) d'un percuteur (30) propre à coopérer avec la tige (T) de dégonflage de la valve monté à coulissement dans un carter (10) qui ménage une chambre (16) coaxiale au percuteur (30) de la tige de dégonflage (T) et qui est percée d'au moins un trou évent (18) d'échappement du fluide gazeux contenu dans l'enceinte à dégonfler (E), caractérisé en ce que le percuteur (30) est monté à coulissement dans une rondelle-piston (35) logée dans ladite chambre (16) et qui est propre à coopérer avec le percuteur (30) à arc-boutement pour maintenir celui-ci dans une position autorisant l'échappement du fluide gazeux contenu dans l'enceinte (E) à dégonfler jusqu'à ce que soit atteinte la valeur de pression prédéterminée.

2. Dispositif selon la Revendication 1, caractérisé en ce que l'arc-boutement de la rondelle-piston (35) sur le percuteur (30) de la tige de dégonflage (T) est obtenu à l'aide d'une butée de blocage (41) en saillie dans ladite chambre (16).

3. Dispositif selon l'une quelconque des Revendications précédentes, caractérisé en ce que la chambre (16) est constituée par une cuvette à paroi latérale en partie filetée (f) avec laquelle est propre à coopérer un bouchon taraudé (13) de réglage de ladite valeur de pression prédéterminée.

4. Dispositif selon l'une quelconque des Revendications précédentes, caractérisé en ce qu'il comprend un ressort taré (40) disposé entre la rondelle-piston (35) et le fond (22) du bouchon (13).

5. Dispositif selon l'une quelconque des Revendications précédentes, caractérisé en ce que le fond (22) du bouchon (13) est percé d'orifices (24, 25) qui débouchent dans la chambre (16) coaxiale au percuteur (30) et par lesquels peut également s'échapper le fluide gazeux contenu dans l'enceinte (E) à dégonfler.

6. Dispositif selon la Revendication 5, caractérisé en ce qu'un filtre (27) est placé au droit desdits orifices (24, 25) du bouchon, entre ce dernier et la cuvette limitant ladite chambre (16).
